# EUROPEAN PATENT APPLICATION

(11) **EP 1 419 703 A1**
(43) Date of publication of application: **19.05.2004**
(21) Application number: 03292813.7
(22) Date of filing: 12.11.2003
(51) Int. Cl.: A23L 1/217, A23L 1/01, A23L 1/015, A23L 1/227, A23L 1/307, A23L 1/2165

(54) **Method for preventing acrylamide formation during heat-treatment of food**

(30) Priority: 15.11.2002 EP 02292855
(71) Applicant: Vico S.A., 02290 Montigny Lengrain (FR); Bioval, 02130 Fere en Tardenois (FR)
(72) Inventor: Tricoit, Jean, 02200 Soisson (FR); Salucki, Laurent, 02290 Vic sur Aisne (FR); Rousset, Gérard, 91320 Wissous (FR)
(74) Representative: Bernasconi, Jean Raymond

(57) **Abstract**

The present invention relates to a method for preventing acrylamide formation in heat-treated food stuffs, in particular in the case of a food processing that involves a frying step and/or a cooking step, which method comprises blocking conversion of glycerol into acrylamide.

## Description

The present invention relates to a method for preventing acrylamide formation in heat-treated food stuffs, in particular in the case of a food processing that involves a frying step and/or a cooking step, which method comprises blocking conversion of glycerol into acrylamide.

Very recently, the question of acrylamide formation in heated food-stuffs has become a major concern since this compound is regarded as a possible carcinogenic agent in humans.

Temperature has been identified as one of the parameters responsible for acrylamide formation in food. Actually, highest concentrations of acrylamide are found in a fried products from plant origin, such as French fries or potato crisps, or in dehydrated food products such as biscuits and crackers, bread crisps or breakfast cereals. On the contrary no acrylamide formation has been reported in food processed below 100°C.

It has been further proposed that the mechanism for acrylamide formation in food relies on the Maillard reaction, *i*.*e*. condensation of a free amino group, from a free amino acid or protein, with a reducing sugar. In particular, it has been reported that Maillard reactions involving asparagine and methionine produce acrylamide (Mottram et al., 2002 ; Stadler et al., 2002).

On the contrary, the inventors identified that the mechanism for acrylamide formation does not involves Maillard reactions but acrolein formation from glycerol and subsequent oxidation and amidation into acrylamide:

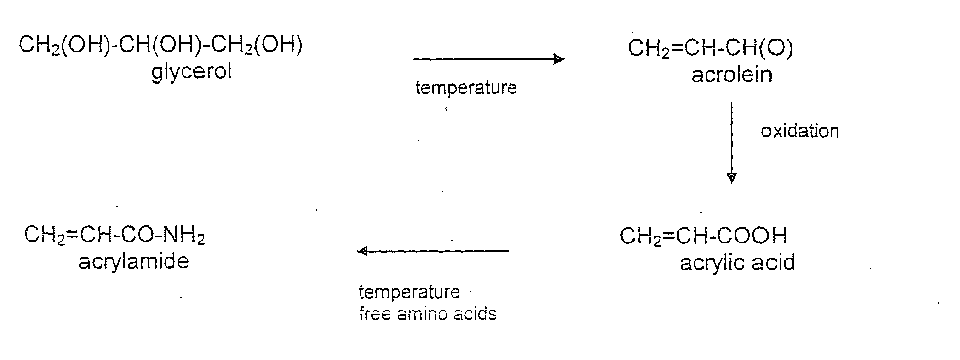

Glycerol may arise from lipid hydrolysis and/or thermolysis. Glycerol is further degraded into acrolein upon heating above smoke point, *i*.*e*. above about 160-170°C for usual oils (corn, sunflower...). Acrolein may be then oxidized into acrylic acid, which may in turn be transformed into acylamide by reacting with an ammonia group, liable to be released from free basic or amidated amino acids when heated above about 100°C.

Plant materials such as potatoes are more particularly affected with acrylamide formation since about one third total amino acids are in free form in potato.

Based on the above acrylamide synthesis pathway, the invention thus provides a new method to prevent acrylamide formation in a food product that is heat-treated.

In the context of the invention, the food product may comprise a plant material selected from the group consisting of fruits, vegetables, roots and cereals. Said plant material may be raw or in a processed or extracted form, such as starch, flour, powder, granules or flakes.

Examples of fruits, vegetables, and cereals according to the invention include in particular potato, sweet potato, taro root, wheat, corn, rye, oats, rice, banana, apple, and pineapple.

The method of the invention applies whenever the following elements are combined: free amino acids, lipids and/or carbohydrate and/or glycerol, and heat. These conditions may arise for instance when frying a plant material, cooking-extruding or baking a plant material, in particular with an added emulsifier such as distilled monoglyceride, diglyceride of partially-hydrogenated soybean oil, propylene glycol derivative or glycerol monostearate.

The food product thus may be a fried or cooked food-stuff. Accordingly, the method of the invention may be implemented for the production of breads, crisps, such as potato, corn, or bread crisps, biscuits and crackers, French fries, dehydrated potato flakes, snacks, or breakfast cereals.

Preferably, said food component is potato and said food product is fried potato crisps or dehydrated potato flakes.

According to the invention, acrylamide formation is prevented by blocking conversion of glycerol into acrylamide. This includes blocking :
1) glycerol formation; and/or
2) acrolein formation, preferably glycerol transformation into acrolein; and/or
2) acrolein oxidation into acrylic acid ; and/or
4) acrylic acid transformation into acrylamide.

Blocking conversion of glycerol into acrylamide is performed during processing of foodstuff, preferably before or during heat treatment.

In the context of the invention, the terms "prevent", "avoid", "block", "blocking", or "removal" are intended for at least partial, preferably total, prevention, blocking removal, etc.

Lipids of, or in contact with, a food component may be hydrolysed and converted into glycerol. Accordingly, in a first embodiment acrylamide formation is blocked by preventing glycerol formation using an antioxidant. Examples of antioxidants generally used in food processing include citric acid, ascorbic acid, caffeic acid, chlorogenic acid. Addition of an antioxidant to said food component may be readily carried out by the skilled in the art. This can be done, for instance, by soaking the food component in a solution containing one or more antioxidants.

Lipid degradation into glycerol is favored in the presence of metallic ions such as Fe, Al, Cu, Cr, and Ni. These metallic ions act as oxidation catalysers, and are activated by the presence of oxygen. Furthermore, metal ions can form metallic soaps (such as iron-stearate) that are oil-soluble and very potent oxidative species. Potato-processing, and in particular potato-crisps production, is particularly prone to iron stearate formation because potato contains high amounts of iron, and fryers are usually made of iron. Glycerol synthesis is also favored by free radicals which removal gives a much lower content of glycerol.

Thus, in another embodiment, the method of the invention prevents glycerol formation by removing metallic ions and/or free radicals from said food product, or by avoiding contacting said food product with products containing metallic ions and/or free radicals.

One skilled in the art can readily implement the method of the invention. Removal of metallic ions and/or free radicals may be achieved by adsorbing on a ion exchange resin, or on activated carbon or silica derivatives, respectively. For instance, where a washed food component is to be fried or cooked, glycerol formation may be prevented by washing said food component with a deionised washing solution. More generally, any process waters may be contacted with a ion exchange resin so as to trap metallic ions from said waters and thereby remove metallic ions from the food product. Additionally, activated carbon or silica derivatives may be dissolved in the waters or oils in contact with said food product so as to remove free radicals.

As used herein, the term "process water" is intended for any aqueous solution which is contacted with the food product during the process of production thereof.

The so formed glycerol may further be thermolyzed into acrolein. This reaction usually takes place at above 100°C, and more particularly above the smoke point of heated oil, where the food component is submitted to frying. Furthermore this extent of acrylamide formation is inversely correlated to the water content of the heat-treated food component.

Accordingly, acrylamide formation may be prevented by blocking glycerol transformation into acrolein by trapping glycerol, for instance by absorbing glycerol on activated carbon or silica derivatives. This may be achieved by dissolving activated carbon or silica derivatives in the waters or oils in contact with said food product.

Otherwise, in food processing, one preferably makes use of materials deprived of either free glycerol, or glycerol derivative, such as glycerolmonostearate.

In another embodiment, formation of acrylamide is prevented by blocking acrolein transformation into acrylic acid by eliminating, i.e. removing, free amino acids. Said amino acids are preferably free basic amino acids, *i*.*e*. lysine, histidine, and arginine, and/or free amidated amino acids, *i.e.* asparagine and glutamine.

When the food component is potato, elimination of free tyrosine is further contemplated since free tyrosine is found in large amounts in potato.

According to the invention, one or more amino acid(s) may be eliminated partially or totally.

Since acrylamide formation is a phenomenon that takes place at the surface of food products, eliminating free amino acids, at least the surface of the food component to be heated, makes it possible to decrease or prevent acrylamide formation.

The choice of the eliminating treatment may be dictated by the nature of the food component and the type of food processing it is involved in. The skilled in the art can readily identify an appropriate method to be implemented.

For instance, where the food processing involves washing of the food component, elimination of free amino acids may be achieved through contacting the washing waters with a silica gel and/or a ion exchange resin.

In particular, in the context of potato processing, for instance for crisps or dehydrated flakes production, elimination may be carried out by treating the washing (cleaning), peeling, slicing, transfer, or blanching and chilling waters of the process. Actually, potato processing may typically involve the steps consisting of cleaning, peeling, slicing and/or blanching and chilling potatoes. Between these different steps, potatoes may be transferred from one apparatus to another by water transfer or mechanical transfer. Free basic and/or amidated amino acids would thus be eliminated before cooking or frying, thereby limiting the chances of providing free ammonia moieties liable to react with acrylic acid to form acrylamide.

According to another embodiment, instead of or in complement to amino acid elimination, acrylamide formation is prevented by blocking free amino acid reactivity. This may be achieved for instance by adding 0.01 % to 1 % Mg (OH)₂, preferably about 0.1 % Mg (OH)₂ in the waters contacted with the food product, *i*.*e*. the washing, peeling, slicing, blanching and chilling waters, where appropriate.

In still another embodiment, acrylamide formation is prevented by blocking oxydation that leads to acrolein transformation into acrylic acid.

Accordingly, one may make use of an antioxidant and/or remove metallic ions and/or free radicals, as described above concerning the blocking of glycerol formation. In particular, activated carbon and/or silica derivatives may be dissolved in the frying oil, where appropriate.

Additionally, the invention provides a method of producing dehydrated potato flakes with reduced acrylamide content that comprises:
- cleaning, and optionally peeling, potatoes,
- slicing, and optionally blanching and chilling said washed potatoes,
- cooking potatoes in an amount sufficient to permit ricing,
- ricing the so cooked potatoes and
- dehydrating and flaking the so obtained wet potato mash,
wherein potatoes or sliced potatoes are optionally water transferred and wherein free amino acids, and in particular free basic or amidated amino acids, and/or metallic ions (such as Fe, Al, Cu, Cr, Ni) and/or free radicals liable to be present in the process waters are eliminated from the transfer, blanching and chilling, or washing waters, and/or free amino acid reactivity is blocked by addition of Mg (OH)₂ up to 0.01 to 1 %, preferably 0.1 % in the transfer, blanching and chilling, and/or washing waters.

In another embodiment, the invention provides a method for producing fried potato crisps with reduced acrylamide content that comprises:
- cleaning, and optionally peeling, potatoes,
- slicing said washed potatoes,
- blanching and chilling or washing said sliced potatoes,
- air sweeping,
- optionally drying,
- frying and oil draining,
wherein potatoes or sliced potatoes are optionally water transferred and wherein free amino acids, and in particular free basic or amidated amino acids, and/or metallic ions and/or free radicals (such as Fe, Al, Cu) liable to be present in the transfer, blanching and chilling, washing or dipping waters are eliminated, and/or free amino acid reactivity is blocked by addition of Mg(OH)₂ up to 0.01 to 1 %, preferably 0.1 % in the transfer, blanching and chilling, and/or washing waters.

Preferably, in the above method for producing fried potato crisps, between the blanching and chilling or washing step and the air-sweeping step, the method further comprises a step consisting of dipping the sliced potatoes in a gel containing a plant-derived polymer selected from the group consisting of methylcellulose (MC), hydroxy-propylmethylcellulose (HPMC) and pentosane. This additional steps makes it possible to form a protecting layer on the surface of the slices. During the frying step, this layer prevents contacting of the potato slices with oil and thereby limit acrylamide formation.

Advantageously, activated carbon and/or silica derivatives are dissolved in the oil to trap free radicals and/or glycerol.

In the method of production of dehydrated potato flakes and/or fried potato crisps according to the invention, said free amino acids are preferably selected in the group consisting of lysine, histidine, arginine, asparagine, glutamine, and tyrosine.

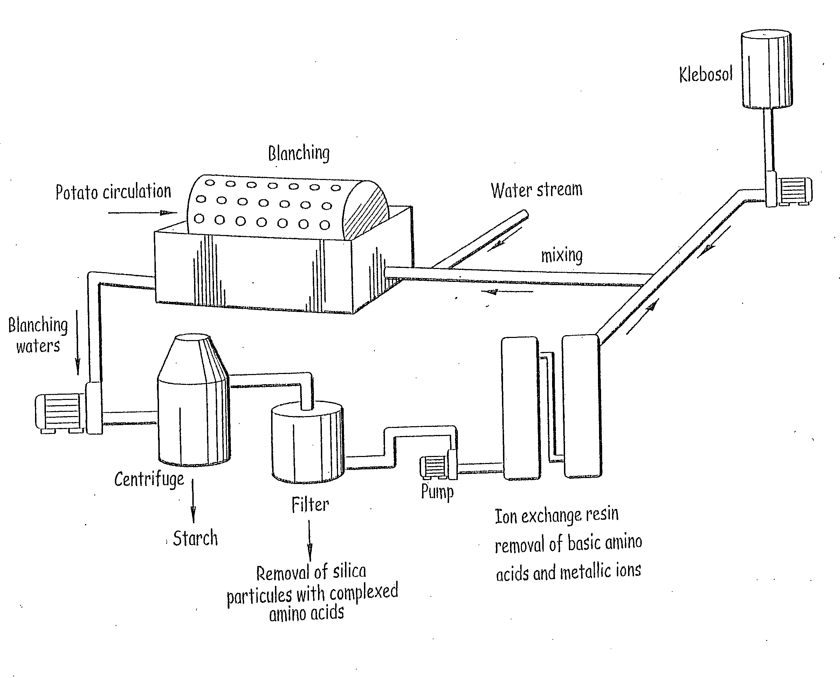

To this end, the transfer, blanching and chilling, washing and/or dipping waters may be contacted with silica, such as the colloidal silica particles Klebosol® (Clariant, USA), under conditions sufficient to allow adsorption of free amino acids to said silica. The waters may be further contacted with a ion exchange resin so that remaining free amino acids and/or metallic ions in the blanching waters be retained on said resin. In particular, the method of the invention may be implemented according to the diagrammatic representation of the blanching and chilling or washing installation shown in figure 1.

Removal of free radicals may be achieved by adsorbing on activated carbon or silica derivatives, respectively. To this end, activated carbon and/or silica derivatives may be dissolved in the process waters and/or in the frying oil so as to trap free radicals.

Advantageously, blanched potatoes are chilled by soaking in a cold solution containing from 0.01 up to 1 % salt (NaOH), salts (K₂HPO₄, KH₂PO₄,sodium acid pyrophosphate (SAPP), or the like) and/or an antioxidant, for instance an antioxidant selected form the group consisting of citric acid, ascorbic acid, caffeic acid, chlorogenic acid.

The absence of metallic ions and free radicals in the water covering the potatoes submitted to the frying step makes it possible to limit degradation of the heated oil and thereby glycerol formation. Furthermore, some of the antioxidants fixed on potatoes may be released in the heated oil bath, especially caffeic acid which is oil-soluble at high temperatures and chlorogenic acid which is partially oil-soluble, and thus are involved in prevention of lipid degradation into glycerol.

Potato crisps and dehydrated potato flakes obtainable by a method as described above are within the scope of the invention.

The method of production of the invention enables to produce dehydrated potato flakes and/or potato crisps in which the amount of acrylamide is decreased at least 5-fold, preferably at least 10-fold, still preferably about 20-fold, compared with products manufactured according to prior art processes.

For instance, while prior art potato chips usually contain about 1000-2000 ppb acrylamide, potato chips according to the invention contain less than 400 ppb, preferably about 50-200 ppb.

### LEGEND TO THE FIGURE :

Figure 1 is a diagrammatic representation of a potato blanching installation.

### EXAMPLE :

A typical flow sheet for a potato-crisps line includes dirt removal, destining, washing and weighing the potato. Afterwards, potatoes' skin is removed by abrasive peeling and the potatoes are further washed and sorted, for instance by optical sorting, before another weighing.

Potatoes are then water transferred (flume) or mechanically transferred directly to slicers where potatoes undergo dewatering before slicing into pieces between 44 and 65/1000 inch, plane or crinkle-cut, or even waffled.

Sliced potatoes are further washed for free starch removal and blanched, preferably cold, for 5 to 10 min with possible addition of salt (NaOH) or salts and with metal-ions removal.

Blanched slices then undergo a cold washing during which metal ions may be removed and/or salts may be added, slices are air-swept and optionally dried for 1-2 min at a temperature comprised between 60 to 145°.

Potato crisps are prepared by dipping the slices in a deep fat fryer for 4 min at 150°C or up to 2 min 30 sec at 185°C. Alternatively, potato slices may be vacuum fried at 120°c which makes it possible to prevent acrylamide formation.

Post frying, potato crisps may further be cooked in a vacuum tunnel or vacuum oven (120°C).

### REFERENCES

Stadler RH, Blank I, Varga N, Robert F, Hau J, Guy PA, Robert MC, Riediker S (2002). Acrylamide from Maillard reaction products. Nature. 419(6906):449-50.

Mottram DS, Wedzicha BL, Dodson AT (2002) Acrylamide is formed in the Maillard reaction. Nature.419(6906):448-9.

## Claims

1. A method for preventing acrylamide formation in a food product that is heat-treated, which method comprises blocking conversion of glycerol into acrylamide.

2. The method according to claim 1, that comprises blocking acrylic acid transformation into acrylamide.

3. The method according to claim 2, that comprises eliminating free amino acids.

4. The method according to claim 3, wherein said amino acids are basic amino acids and/or amidated amino acids.

5. The method according to claim 2 or 3, wherein said free amino acids are eliminated by contacting with a silica gel or a ion exchange resin.

6. The method according to any one of preceding claims, that comprises blocking glycerol transformation into acrolein.

7. The method according to claim 6, wherein glycerol transformation into acrolein is blocked by trapping glycerol on activated carbon or silica derivatives.

8. The method according to any one of preceding claims, that comprises blocking glycerol formation and/or acrolein transformation into acrylic acid.

9. The method according to claim 8, wherein glycerol and/or acrylic acid formation is prevented using an antioxidant.

10. The method according to claim 9, wherein said antioxidant is selected from the group consisting of citric acid, ascorbic acid, caffeic acid, and chlorogenic acid.

11. The method according to any one of claims 8 to 10, wherein glycerol and/or acrylic acid formation is blocked by removing metallic ions and/or free radicals from said food product.

12. The method according to claim 11, wherein free radicals are removed from said food product by adsorbing on activated carbon or silica derivatives.

13. The method according to claim 11 or 12, wherein metallic ions are removed from said food product by adsorbing on a ion exchange resin.

14. The method according to any one of preceding claims, wherein said food product comprises a plant material selected from the group consisting of fruits, vegetables, roots and cereals.

15. The method according to claim 14, wherein said plant material is selected from the group consisting of potato, sweet potato, taro root, wheat, corn, rye, oats, rice, banana, apple, and pineapple.

16. The method according to claim 14 or 15, wherein said food product comprises a processed plant material in the form of a flour, a powder, a granule or a flake.

17. The method according to any of preceding claims, wherein said food product consists of potato crisps or dehydrated potato flakes.

18. A method of producing dehydrated potato flakes with reduced acrylamide content that comprises :
- cleaning, and optionally peeling, potatoes,
- slicing, and optionally blanching and chilling, said potatoes,
- cooking potatoes in an amount sufficient to permit ricing,
- ricing the thus cooked potatoes and
- dehydrating and flaking the so obtained wet potato mash,
wherein potatoes or sliced potatoes are optionally water transferred and, wherein free amino acids and/or metallic ions and/or free radicals liable to be present in the process waters are eliminated from the transfer, blanching and chilling, or washing waters, and/or wherein Mg (OH)₂ is added up to 0.01 to 1 % in the transfer, blanching and chilling, or washing waters.

19. A method for producing fried potato crisps with reduced acrylamide content that comprises:
- cleaning, and optionally peeling, potatoes,
- slicing said potatoes,
- blanching and chilling or washing said sliced potatoes,
- air sweeping,
- optionally drying,
- frying and oil draining,
wherein potatoes or sliced potatoes are optionally water transferred and in which free amino acids and/or metallic ions and/or free radicals liable to be present in the transfer, blanching and chilling, washing waters are eliminated, and/or wherein Mg (OH)₂ is added up to 0.01 to 1 % in the transfer, blanching and chilling, or washing waters.

20. The method according to claim 19, which further comprises, between the blanching and chilling or washing step and the air-sweeping step, a step consisting of dipping the sliced potatoes in a gel containing a plant-derived polymer selected from the group consisting of methylcellulose (MC), hydroxy-propylmethylcellulose (HPMC) and pentosane.

21. The method according to claim 19 or 20, wherein activated carbon and/or silica derivatives are dissolved in the frying oil to trap free radicals and/or glycerol.

22. The method according to any one of claims 18 to 21, wherein said free amino acids are selected from the group consisting of lysine, histidine, arginine, asparagine, glutamine, and tyrosine.

23. The method according to any one of claims 18 to 22, wherein the transfer, blanching and chilling, washing and/or dipping waters are contacted with silica, under conditions sufficient to allow adsorption of free amino acids to said silica.

24. The method according to any one of claims 18 to 23, wherein the transfer, blanching and chilling, washing and/or dipping waters are contacted with a ion exchange resin so that free amino acids and/or ions in the blanching waters are retained on said resin.

25. The method according to any one of claims 18 to 24, wherein activated carbon and/or silica derivatives are dissolved in the transfer, blanching and chilling, washing and/or dipping waters to trap free radicals.

26. The method according to any one of claim 18 to 25, wherein potatoes are blanched and chilled, washed, and/or transferred by soaking in a cold solution containing a salt and/or an antioxidant.

27. A deshydrated potato flake obtainable by a method according to any one of claims 18 and 22 to 26.

28. A fried potato crisp obtainable by a method according to any one of claims 19 to 26.
